# EUROPÄISCHE PATENTSCHRIFT

(11) **EP 1 155 922 B1**
(45) Veröffentlichungstag und Bekanntmachung des Hinweises auf die Patenterteilung: **11.07.2007**
(21) Anmeldenummer: 01110650.7
(22) Anmeldetag: 02.05.2001
(51) Int. Cl.: B60R 21/06

(54) **Kraftfahrzeug mit einer Rückhaltevorrichtung für dessen Laderaum**
Vehicle with a retaining device for its luggage compartment
Véhicule avec un dispositif de retenue pour son compartiment à bagages

(30) Priorität: 16.05.2000 DE 10023709
(43) Veröffentlichungstag der Anmeldung: 21.11.2001
(73) Patentinhaber: BOS GmbH & Co. KG, 73760 Ostfildern (DE)
(72) Erfinder: Butz, Peter, 20149 Hamburg (DE); Sitzler, Wolfgang, 42111 Wuppertal (DE)
(74) Vertreter: Patentanwälte Ruff, Wilhelm, Beier, Dauster & Partner

(56) Entgegenhaltungen:
- WO-A-91/12155
- DE-A- 3 909 397
- DE-A- 19 605 338
- FR-A- 2 699 875
- FR-A- 2 741 019
- US-A- 5 876 064

## Beschreibung

Die Erfindung betrifft ein Kraftfahrzeug mit einer Rückhaltevorrichtung für dessen Laderaum wie z.B. ein Kombinationskraftwagen, entsprechend dem Oberbegriff des Anspruchs 1. Eine solches Kraftfahrzeug mit einer Rückhaltevorrichtung ist durch die EP 0 515 481 B1 bekanntgeworden.

Bei dem bekannten Kraftfahrzeug und der bekannten Rückhaltevorrichtung (EP 0 515 481 B1) ist entsprechend der jeweiligen Breite zweier einzelner Sitzlehnen oben an deren Rückseiten jeweils ein mit der Sitzlehne weitestgehend integriertes Rollogehäuse vorgesehen.

Jedes Rollogehäuse enthält eine Wickelwelle mit einem eigenen Federmotor, gegen dessen Rückstellmoment jeweils eine Netzbahn von der Wickelwelle abgezogen bzw. abgerollt werden kann.

Eine der beiden Netzbahnen trägt an ihrem oberen freien Querrand einen teleskopierbaren Haltestab, welcher sich über die gesamte lichte Weite des Fahrzeuginnenraums erstreckt und welcher mit seinen beiden etwa bundartigen Riegelenden jeweils fahrzeugseitig in schlüssellochartigen Beschlägen, die z.B. an den C-Säulen angebracht sein können, eingerastet werden kann. Eine der beiden Netzbahnen trägt an ihrem freien Querrand ein etwa hakenförmig profiliertes Formteil, welches auf den unbesetzten Axialbereich der teleskopierbaren Haltestange für den Fall aufgerastet werden kann, dass beide Netzbahnen in ihre aufgespannte Betriebsstellung versetzt werden sollen.

Vorteilhaft ist die durch die EP 0 515 481 B1 bekannte Rückhaltevorrichtung insofern, als diese das Umklappen einer Sitzlehne oder das Entfernen des betreffenden - allerdings nur einen - Sitzes (z.B. mit Einzelsitzfläche oder Doppelsitzfläche) gestattet, ohne dass dadurch die Sperrfunktion der Rückhaltevorrichtung im Bereich der anderen Sitzlehne beeinträchtigt wird.

Ausgehend von dem durch die EP 0515 481 her bekannten Kraftfahrzeug und dessen Rückhaltevorrichtung, liegt der Erfindung die Aufgabe zugrunde, ein Kraftfahrzeug mit einer Ruckhaltevorrichtung zu schaffen wobei die Rückhaltevorrichtung universeller als bisher eingesetzt werden kann.

In Verbindung mit den Merkmalen des Oberbegriffs des Anspruchs 1 wird diese Aufgabe entsprechend der Erfindung dadurch gelöst, dass die Aufnahmehalterung an der Dachinnenfläche angeordnet ist, dass jede einzelne Werkstoffbahn unabhängig von der jeweils anderen Werkstoffbahn mit ihrem freien Querrand in Richtung Sitz-Einbaubereich ausziehbar ist, dass jede der Werkstoffbahnen in unterschiedlichen Ausziehlängen gegen ein zusätzliches Ausziehen festlegbar ist, dass zumindest jede klappbare Sitzlehne des Sitz-Einbaubereichs mit einer sitzlehnenseitigen Halterung zur lösbaren Befestigung des freien Querrandes der jeweils zugeordneten Werkstoffbahn versehen ist, und dass an der Dachinnenfläche oder benachbart der Dachinnenfläche eine Anzahl von fahrzeugseitigen Halterungen vorhanden ist, welche eine alternativ versetzbare lösbare Befestigung der Aufnahmehalterung gestatten.

Bei dem erfindungsgemäßen Kraftfahrzeug ist die Aufnahmehalterung gewissermaßen hängend an der Dachinnenfläche angeordnet. Jede einzelne Sitzlehne trägt rückseitig benachbart ihrem Scheitelbereich eine Halterung zur lösbaren Befestigung des freien Querrandes der jeweils zugeordneten Werkstoffbahn, welche von der Dachinnenfläche in Richtung Sitz-Einbaubereich herabgezogen werden kann.

In ihrer Betriebsposition ist jede Werkstoffbahn unabhängig davon, ob deren freier Querrand an einer herabgeklappten Sitzlehne oder an einer aufrechten Sitzlehne befestigt wird, gegen ein weiteres Ausziehen bzw. Abrollen von der Wickelwelle gesichert. Dies kann zweckmäßig und beispielsweise dadurch geschehen, dass die Wickelwelle ein Drehrichtgesperre enthält, wie es beispielsweise in der DE 27 49 560 A1 beschrieben ist.

Das erfindungsgemäße Kraftfahrzeug und dessen Rückhaltevorrichtung gestatten im Unterschied zu der bekannten Anordnung gemäß der EP 0 515 481 B1 den Vorteil, dass jede beliebige Werkstoffbahn unabhängig von einer anderen Werkstoffbahn in ihre Betriebsstellung oder in ihre Ruhestellung hinein versetzt werden kann.

Weiterhin bietet die erfindungsgemäße Anordnung den Vorteil, dass die Aufnahmehalterung unterschiedlich positioniert werden kann, um ggf. die Vorschubposition eines Sitzes oder den Umstand berücksichtigen zu können, dass die Sitzlehne sich entweder in ihrer umgeklappten oder in ihrer aufrechten Betriebsposition befindet. Dies geschieht entsprechend den Erfindungsmerkmalen dadurch, dass an der Dachinnenfläche oder benachbart der Dachinnenfläche eine Anzahl von fahrzeugseitigen Halterungen vorhanden ist, welche eine alternativ versetzbare lösbare Befestigung der Aufnahmehalterung gestatten.

Letzteres kann beispielsweise bei weiterer Ausgestaltung der Erfindung in der Art verwirklicht werden, dass die fahrzeugseitigen Halterungen etwa entsprechend dem durch das Umklappen der jeweiligen Sitzlehne von einer aufrechten in eine herabgeschwenkte Position bedingten Versatz ebenfalls versetzt angeordnet sind.

Als zweckmäßig hat sich herausgestellt, die sitzlehnenseitige Halterung jeweils an der Rückseite der Sitzlehne benachbart dem freien Ende der Sitzlehne anzuordnen.

Eine hinsichtlich ihrer Handhabung, insbesondere bei der lösbaren Montage, vorteilhafte Ausführungsform nach Art einer zusammenhängenden kompakten Baugruppe besteht entsprechend der Erfindung darin, dass sämtliche Wickelwellen auf derselben geometrischen Achse innerhalb derselben Aufnahmehalterung angeordnet sein können.

Für besondere Anwendungsfälle, z.B. in Verbindung mit besonderen Dachformen, kann es indessen zweckmäßig sein, dass die Aufnahmehalterung in Aufnahmehalterungs-Abschnitte unterteilt ist, die unabhängig voneinander lösbar im dachseitigen Fahrzeugeinbaufeld angebracht sein können.

Eine stabile Befestigung einer durchgehenden Aufnahmehalterung ist entsprechend weiteren Erfindungsmerkmalen dadurch gewährleistet, dass an beiden gegenüberliegenden Längsholmen der Karosserie fahrzeugseitige Halterungen für die beiden Stirnenden einer sämtliche Wickelwellen enthaltenden Aufnahmehalterung angeordnet sind.

Das erfindungsgemäße Kraftfahrzeug mit dessen Rückhaltevorrichtung kann auch dann verwendet werden, wenn besonderes Ladegut die zeitweilige Entfernung eines Sitzes erfordert. Hierzu sieht die Erfindung vor, dass der Sitz-Einbaubereich außer den sitzlehnenseitigen Halterungen zur lösbaren Befestigung der freien Querränder der jeweiligen Werkstoffbahn analoge zusätzliche Halterungen, insbesondere am Fahrzeugboden, aufweist.

Diese zusätzlichen Halterungen des Sitz-Einbaubereichs können gemäß weiteren Merkmalen der Erfindung etwa entsprechend dem durch das Umklappen der jeweiligen Sitzlehnen von einer aufrechten in eine herabgeschwenkte Position bedingten Versatz ebenfalls versetzt angeordnet sein.

In den Zeichnungen ist ein bevorzugtes Ausführungsbeispiel entsprechend der Erfindung dargestellt, es zeigt
Fig. 1 eine mehr schematische räumliche Innenansicht eines Kombinationskraftwagens mit in ihrer herabgeschwenkten Position befindlichen Sitzlehnen von Einzelsitzen einer Fondsitzreihe und
Fig. 2 in Anlehnung an die Darstellungsweise gemäß Fig. 1 die Anordnung mit in ihrer aufrechten Position befindlichen hochgeklappten Sitzlehnen.

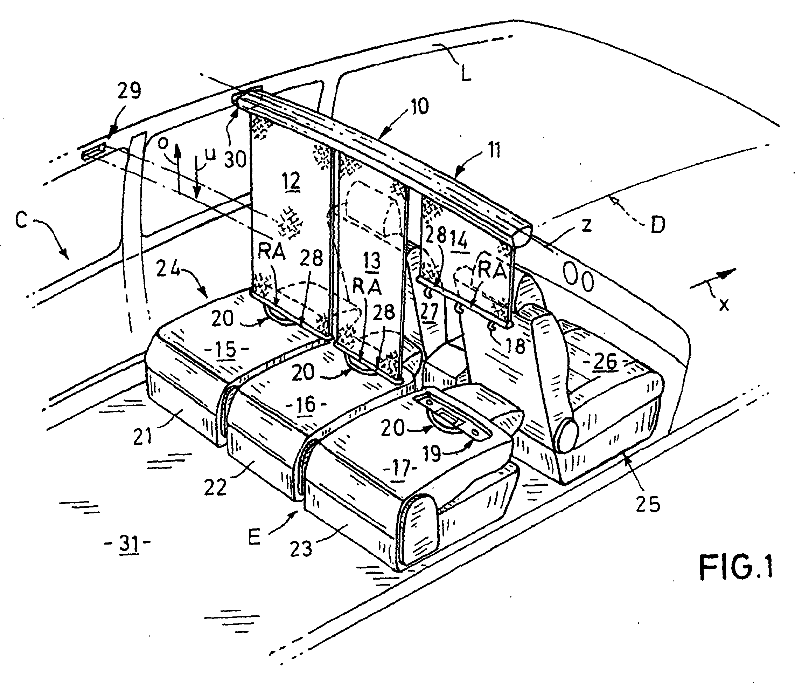

Die mit 10 bezeichnete Rückhaltevorrichtung gemäß Fig. 1 weist ein Rollogehäuse 11 auf, welches in nicht dargestellter Weise drei Wickelwellen enthält, die etwa koaxial entlang der Längsachse z des Rollogehäuses 11 in letzterem gelagert sind. Das Rollogehäuse 11 ist unterhalb der mit D bezeichneten, zeichnerisch nur angedeuteten Dachinnenfläche lösbar angeordnet.

An jeder Wickelwelle ist in nicht gezeigter Weise ein innerer freier Querrand einer Werkstoffbahn, hier jeweils einer Netzbahn 12, 13, 14 befestigt. Jede Netzbahn 12, 13, 14 ist mit ihrem äußeren freien Querrand RA entgegen der Rückstellkraft eines Federmotors der jeweiligen Wickelwelle nach unten in Richtung u ausziehbar und in Richtung o von der betreffenden Wickelwelle nach oben hin aufwickelbar.

Ein jeder unterer freier Querrand RA ist mit etwa hakenartigen Riegelfortsätzen versehen, von denen nur ein Riegelfortsatz unterhalb der Netzbahn 14 beispielsweise mit der Bezugsziffer 18 bezeichnet ist. Jeder Riegelfortsatz 18 kann in Riegelöffnungen 19 von Halterungen 20 lösbar befestigt werden, die jeweils am oberen freien Rand an der Rückseite von Sitzlehnen 15, 16, 17 von Einzelsitzen 21, 22, 23 einer Fondsitzreihe 24 befestigt sind. Die Einzelsitze der vorderen Sitzreihe 25 tragen die Bezugsziffern 26, 27.

Die hakenartigen Riegelfortsätze 18 können als integrale oder angebaute Bauteile Zugleisten 28 zugeordnet sein, welche jeweils den unteren freien Querrand RA der jeweiligen Netzbahn 12, 13, 14 begrenzen.

Anhand von Fig. 1 ist zu ersehen bzw. vorstellbar, dass die Fondsitzlehnen 15, 16, 17 sich in ihrer herabgeklappten Position befinden und dass die Zugleisten 28 mit ihren Riegelfortsätzen 18 in den Riegelöffnungen 19 der zugehörigen Halterungen 20 der Sitzlehnen 15, 16 lösbar verrastet sind.

Die Netzbahn 14 befindet sich mit ihrem äußeren freien Rand RA in einer Zwischenstellung auf ihrem Ausziehweg in Richtung u nach unten. Jede Wickelwelle ist mit einem beispielsweise schaltbaren Drehrichtgesperre versehen, welches zumindest ein weiteres Ausziehen der jeweiligen Netzbahn 12, 13, 14 jedenfalls dann verhindert, wenn die Verriegelungsposition der Zugleisten 28 mit den sitzlehnenseitigen Halterungen 20 erreicht ist.

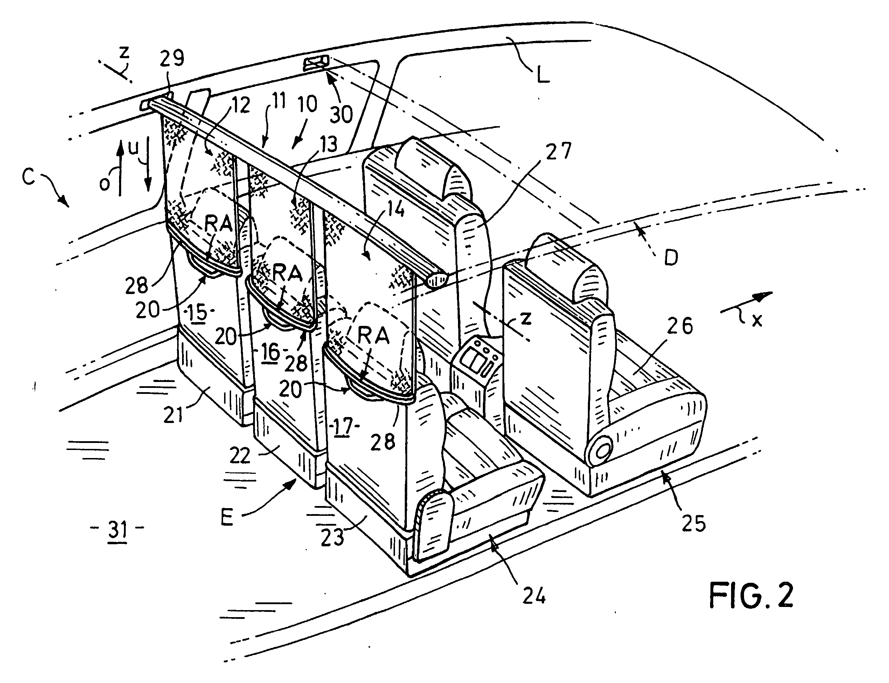

Zur lösbaren Halterung der beiden Stirnseiten des Rollogehäuses 11 weist letzteres nicht dargestellte, in Richtung der Längsachse z ein- und ausfahrbare, Riegelfortsätze auf, welche in Riegelaussparungen 30 lösbar zu verrasten sind. Die Riegelaussparungen 30 sind besonderen Riegelbeschlägen an den oberen fahrzeugseitigen Längsholmen L zugeordnet. In den Fig. 1 und 2 ist nur einer der beiden Längsholme L eingetragen.

Die Darstellung gemäß Fig. 2 unterscheidet sich von der Darstellung gemäß Fig. 1 dadurch, dass die Sitzlehnen 15, 16, 17 in ihre aufrechte Position hinein hochgeklappt sind. Die Zugleisten 28 sind gleichwohl mit den Halterungen 20 verrastet, indessen sind aber, weil die Sitzlehnen 15, 16, 17 hochgeklappt sind, die Netzbahnen 12, 13, 14 nicht gänzlich ausgefahren. Die Netzbahnen 12, 13, 14 besitzen auch bei der Anordnung gemäß Fig. 2 einen im wesentlichen senkrechten Verlauf. Dieses deswegen, weil das Rollogehäuse 11 im Vergleich zu Fig. 1 entgegen der Fahrtrichtung x in seine lösbare Montageposition innerhalb der Riegelaussparungen 29 versetzt ist.

In den Zeichnungen ist nicht dargestellt, dass dem allgemein mit E bezeichneten Sitz-Einbaubereich gesonderte Halterungen zugeordnet sind, welche erst nach Herausnahme von Sitzen 21, 22, 23 zugänglich werden. Diese gesonderten Halterungen entsprechen etwa den sitzlehnenseitigen Halterungen und sind ggf. analog zu den Riegelaussparungen 29, 30 entlang der Fahrtrichtung x versetzt angeordnet.

Auf diese Weise ist es möglich, die Rückhaltevorrichtung 10 wahlweise mit einzelnen Netzbahnen oder mit allen Netzbahnen 12, 13, 14 in ihre Sperrstellung zu versetzen, wenn einer der Sitze oder alle Sitze 15, 16, 17 zeitweilig ausgebaut sind. Die beschriebenen nicht gezeigten, den sitzlehnenseitigen Halterungen 20 entsprechenden Halterungen sind zweckmäßig an der Innenfläche des Karosseriebodens 31 des Laderaums C angeordnet.

## Patentansprüche

1. Kraftfahrzeug mit einer Rückhaltevorrichtung (10) für dessen Laderaum (C) mit einer länglichen Aufnahmehalterung (11), aus welcher mindestens eine, mit ihrem inneren Querrand jeweils an einer Wickelwelle, die in der Aufnahmehalterung (11) angeordnet ist, gehaltene Werkstoffbahn (12, 13, 14) mit ihrem freien äußeren Querrand (RA) von der jeweiligen Wickelwelle entgegen einem Rückstellmoment ausziehbar und zwischen einem Sitz-Einbaubereich (E) für jeweils einen mit einer klappbaren Sitzlehne (15, 16, 17) versehenen Kraftfahrzeugsitz (21, 22, 23) und der Dachinnenfläche (D) des Kraftfahrzeuges aufspannbar sind **dadurch gekennzeichnet, dass** mehrere Werkstoffbahnen (12, 13, 14) aus der Aufnahmehalterung (11) ausziehbar sind, dass die Aufnahmehalterun (11) an der Dachinnenfläche (D) angeordnet ist, dass jede einzelne Werkstoffbahn (12, 13, 14) unabhängig von der jeweils anderen Werkstoffbahn (12, 13, 14) mit ihrem freien Querrand (RA) in Richtung Sitz-Einbaubereich (E) ausziehbar ist, dass jede der Werkstoffbahnen (12, 13, 14) in unterschiedlichen Ausziehlängen gegen ein zusätzliches Ausziehen festlegbar ist, dass zumindest jede klappbare Sitzlehne (15, 16, 17) im Sitz-Einbaubereich (E) mit einer sitzlehnenseitigen Halterung (20) zur lösbaren Befestigung des freien Querrandes (RA) der jeweils zugeordneten Werkstoffbahn (12, 13, 14) versehen ist, und dass an der Dachinnenfläche (D) oder benachbart der Dachinnenfläche (D) eine Anzahl von fahrzeugseitigen Halterungen (29, 30) vorhanden sind, welche eine alternativ versetzbare lösbare Befestigung der Aufnahmehalterung (11) gestatten.

2. Kraftfahrzeug nach Anspruch 1, **dadurch gekennzeichnet, dass** die sitzlehnenseitige Halterung (20) jeweils an der Rückseite der Sitzlehne (15, 16, 17) benachbart dem freien Ende der Sitzlehne (15, 16, 17) angeordnet ist.

3. Kraftfahrzeug nach Anspruch 1 oder nach Anspruch 2, **dadurch gekennzeichnet, dass** die fahrzeugseitigen Halterungen (29, 30) etwa entsprechend dem durch das Umklappen der jeweiligen Sitzlehne (15, 16, 17) von einer aufrechten in eine herabgeschwenkte Position bedingten Versatz ebenfalls versetzt angeordnet sind.

4. Kraftfahrzeug nach Anspruch 3, **dadurch gekennzeichnet, dass** sämtliche Wickelwellen auf derselben geometrischen Achse innerhalb derselben Aufnahmehalterung (11) angeordnet sind.

5. Kraftfahrzeug nach einem der Ansprüche 1 bis 3, **dadurch gekennzeichnet, dass** die Aufnahmehalterung (11) in Aufnahmehalterungs-Abschnitte unterteilt ist.

6. Kraftfahrzeug nach einem der Ansprüche 1 bis 4, **dadurch gekennzeichnet, dass** an beiden gegenüberliegenden Längsholmen (L) der Karosserie fahrzeugseitige Halterungen (29, 30) für die beiden Stirnseiten einer sämtliche Wickelwellen enthaltenden Aufnahmehalterung (11) angeordnet sind.

7. kraftfahrzeug nach einem der Ansprüche 1 bis 6, **dadurch gekennzeichnet, dass** der Sitz-Einbaubereich (E) außer den sitzlehnenseitigen Halterungen (20) zur lösbaren Befestigung der freien Querränder (RA) der jeweiligen Werkstoffbahn (12, 13, 14) analoge zusätzliche Halterungen, insbesondere am Fahrzeugboden (31), aufweist.

8. Kraftfahrzeug nach Anspruch 7, **dadurch gekennzeichnet, dass** die zusätzlichen Halterungen des Sitz-Einbaubereichs (E) etwa entsprechend dem durch das Umklappen der jeweiligen Sitzlehne (15, 16, 17) von einer aufrechten in eine herabgeschwenkte Position bedingten Versatz ebenfalls versetzt angeordnet sind.

## Claims

1. Motor vehicle having a restraint device (10) for the loading space (C) thereof, having an elongate holder (11) from which at least one material web (12, 13, 14) held with its inner transverse edge on a respective winding roller arranged in the holder (11) is withdrawable by means of its free outer transverse edge (RA) from the respective winding roller against a restoring moment and is tensionable between a seat installation area (E) for a respective vehicle seat (21, 22, 23) equipped with a foldable seat back (15, 16, 17) and the roof inner surface (D) of the motor vehicle, **characterised in that** a plurality of material webs (12, 13, 14) are withdrawable from the holder (11), **in that** the holder (11) is arranged on the roof inner surface (D), **in that** each individual material web (12, 13, 14) is withdrawable independently of the respective other material web (12, 13, 14) by means of its free transverse edge (RA) towards the seat installation area (E), **in that** each of the material webs (12, 13, 14) is fixable in different withdrawal lengths against further withdrawal, **in that** at least each foldable seat back (15, 16, 17) in the seat installation area (E) is equipped with a retainer (20) fitted to the seat back for releasable fixing of the free transverse edge (RA) of the respective associated material web (12, 13, 14), and **in that** on the roof inner surface (D) or adjacent to the roof inner surface (D) a number of retainers (29, 30) fitted to the vehicle are provided, each of which permits an alternatively displaceable, releasable fixing of the holder (11).

2. Motor vehicle according to Claim 1, **characterised in that** the retainer (20) fitted to the seat back is arranged in each case on the rear side of the seat back (15, 16, 17) adjacent to the free end of the seat back (15, 16, 17).

3. Motor vehicle according to Claim 1 or Claim 2, **characterised in that**, approximately corresponding to the offset caused by folding down the respective seat back (15, 16, 17) from an upright into a swung-down position, the retainers (29, 30) fitted to the vehicle are arranged similarly offset.

4. Motor vehicle according to Claim 3, **characterised in that** all winding rollers are arranged on the same geometric axis within the same holder (11).

5. Motor vehicle according to any one of Claims 1 to 3, **characterised in that** the holder (11) is divided into holder sections.

6. Motor vehicle according to any one of Claims 1 to 4, **characterised in that** retainers (29, 30) fitted to the vehicle for the two end faces of a holder (11) containing all winding rollers are arranged on the two opposing longitudinal rails (L) of the car body.

7. Motor vehicle according to any one of Claims 1 to 6, **characterised in that**, apart from the retainers (20) fitted to the seat back for releasable fixing of the free transverse edges (RA) of the respective material web (12, 13, 14), the seat installation area (E) comprises analogous additional retainers, especially on the vehicle floor (31).

8. Motor vehicle according to Claim 7, **characterised in that**, approximately corresponding to the offset caused by folding down the respective seat back (15, 16, 17) from an upright into a swung-down position, the additional retainers of the seat installation area (E) are arranged similarly offset.

## Revendications

1. Véhicule automobile comportant un dispositif de retenue (10) pour son coffre (C), avec un support longitudinal à logement (11), à partir duquel au moins une bande de matériau (12, 13, 14), dont chacune est maintenue par sa largeur intérieure sur un axe d'enroulement disposé dans le support de logement (11), est étirable par sa largeur extérieure libre (RA) de son axe d'enroulement respectif contre un couple de rappel, et peut être tendue entre une zone de montage de siège (E) pour un siège de véhicule correspondant (21, 22, 23) pourvu d'un dossier rabattable (15, 16, 17) et la surface intérieure de toit (D) du véhicule, **caractérisé en ce que** plusieurs bandes de matériau (12, 13, 14) sont étirables du support de logement (11), **en ce que** le support de logement (11) est disposé contre la surface intérieure de toit (D), **en ce que** chaque bande de matériau (12, 13, 14) est étirable par sa largeur extérieure libre (RA) indépendamment des autres bandes de matériau (12, 13, 14), vers la zone de montage de siège (E), **en ce que** chaque bande de matériau (12, 13, 14) est blocable contre une nouvelle traction dans différentes longueurs d'extension, **en ce qu'**au moins chaque dossier rabattable (15, 16, 17) est pourvu dans la zone de montage de siège (E) d'une fixation (20) montée sur le dossier pour la fixation amovible de la largeur extérieure libre (RA) de la bande de matériau (12, 13, 14) correspondante, et **en ce qu'**un certain nombre de fixations (29, 30) montées sur le véhicule sont disposées sur la surface intérieure du toit (D) ou à proximité de la surface intérieure du toit (D), permettant une fixation amovible alternativement décalable pour le support de logement (11).

2. Véhicule automobile selon la revendication 1, **caractérisé en ce que** chaque fixation (20) montée sur un dossier est disposée sur la face arrière du dossier (15, 16, 17) à proximité de l'extrémité libre du dossier (15, 16, 17).

3. Véhicule automobile selon la revendication 1 ou la revendication 2, **caractérisé en ce que** les fixations (29, 30) montées sur le véhicule sont espacées sensiblement de la valeur du décalage consécutif au rabattement de chaque dossier (15, 16, 17) d'une position redressée vers une position horizontale.

4. Véhicule automobile selon la revendication 3, **caractérisé en ce que** tous les axes d'enroulement sont disposés sur le même axe géométrique à l'intérieur du même support de logement (11).

5. Véhicule automobile selon l'une des revendications 1 à 3, **caractérisé en ce que** le support de logement (11) est subdivisé en tronçons de support de logement.

6. Véhicule automobile selon l'une des revendications 1 à 4, **caractérisé en ce que** des fixations (29, 30) montées sur le véhicule sont prévues sur les deux longerons (L) opposés de la carrosserie pour les deux faces frontales d'un support de logement (11) contenant tous les axes d'enroulement.

7. Véhicule automobile selon l'une des revendications 1 à 6, **caractérisé en ce que** la zone de montage de siège (E) présente, à part des fixations (20) montées sur les dossiers, des fixations complémentaires analogues pour la fixation amovible, notamment sur le plancher du véhicule (31), des largeurs libres (RA) des différentes bandes de matériau (12, 13, 14).

8. Véhicule automobile selon la revendication 7, **caractérisé en ce que** les fixations complémentaires de la zone de montage de siège (E) sont espacées sensiblement de la valeur du décalage consécutif au rabattement de chaque dossier (15, 16, 17) d'une position redressée vers une position rabattue.
